# EUROPEAN PATENT APPLICATION

(11) **EP 4 734 235 A1**
(43) Date of publication of application: **29.04.2026**
(21) Application number: 25193890.8
(22) Date of filing: 04.08.2025
(51) Int. Cl.: H01M 10/658, H01M 50/231, H01M 50/233, H01M 50/24, B32B 7/027, H01G 11/78, H01M 10/6556, H01M 50/251, E04B 1/62

(54) **INSULATION APPARATUS AND ENERGY STORAGE SYSTEM INCLUDING THE SAME**

(30) Priority: 25.10.2024 KR 20240147841
(71) Applicant: SAMSUNG SDI CO., LTD., Yongin-si, Gyeonggi-do 17084 (KR)
(72) Inventor: KIM, Taeyoung, 17084 Yongin-si (KR)
(74) Representative: Marks & Clerk LLP

(57) **Abstract**

An insulation apparatus includes a panel portion including an insulating layer, a pair of frame portions arranged to surround opposing sides of the panel portion, and an insulating portion positioned between the panel portion and each of the frame portions, wherein a space is formed between each of the frame portions and the panel portion.

## Description

### FIELD

Embodiments of the present disclosure relate to an insulation apparatus and an energy storage system including the same.

### BACKGROUND

Recently, due to high oil prices and the expansion of heating and cooling equipment caused by abnormal climate changes, energy demand has increased every year. In addition, new energy demand has continued to arise due to increased income, improved quality of life, and demand for advanced services, and direct dependence on electricity has been deepened, which may lead to disruptions in electricity supply and demand.

Energy storage systems (ESS) have come to prominence as one of the solutions to the power crisis. Energy storage systems store excess electricity or electricity produced by renewable energy (solar energy, wind energy, etc.) so that stored power may be used when needed.

Energy storage systems store electricity in large quantities, including energy storage means, such as batteries for storing electricity. Recently, energy storage systems equipped with batteries ranging from hundreds of kWh to megawatt-hours have been commercialized as part of movable energy storage systems.

Energy storage systems are free to move and not restricted by installation location and may store idle electricity during times when electricity demand is low and supply electricity during times when demand is high, thereby ensuring stable use of electricity. In addition, energy storage systems have been utilized as key infrastructure for the popularization of electric vehicles, and their importance has emerged as one of the new growth engine industries.

Energy storage systems are configured by loading battery modules including lithium-ion batteries. A certain number of battery modules are electrically connected to each other on a battery rack formed in multiple stages and installed in a battery storage inside the energy storage system. Lithium-ion batteries included in energy storage systems store energy at a high density and are easily exposed to the risk of overheating, fire, and explosion depending on the internal and external environments. If a thermal runaway phenomenon occurs in one of the batteries within an energy storage system, the thermal runaway phenomenon may spread to adjacent battery modules, resulting in a large-scale fire. Therefore, energy storage systems are required to have a structure that may prevent the spread of fire.

However, the related art energy storage systems were developed based on convenience of movement and durability and had high thermal conductivity and very poor insulation, and thus, heat from the inner surface caused by a fire inside the energy storage systems was directly transferred to the outer surface through a metal angle member and a frame member.

### SUMMARY

The present disclosure provides an insulation apparatus capable of preventing heat conduction between an inner surface and an outer surface of an energy storage system and an energy storage system including the insulation apparatus.

The problems to be solved by the present disclosure are not limited to the problems mentioned herein, and other problems and advantages of the present disclosure that are not mentioned may be understood by the following description and will be more clearly understood by the embodiments of the present disclosure. In addition, it will be appreciated that the problems and advantages to be solved by the present disclosure may be realized by the means and combinations thereof indicated in the claims.

According to an aspect of the present disclosure, there is provided an insulation apparatus including a panel portion including an insulating layer, a pair of frame portions arranged to surround opposing sides of the panel portion, and an insulating portion positioned between the panel portion and the frame portion, wherein a space is formed between each of the pair of the frame portions and the panel portion.

The panel portion may include a first cover layer positioned on one surface of the insulating layer and a second cover layer positioned to face the first cover layer with the insulating layer therebetween.

An area of the first cover layer or the second cover layer may be greater than an area of the insulating layer.

The insulation apparatus may further include a panel cover positioned on one surface of the panel portion facing an external space of the energy storage system.

The panel cover may include a plurality of depressions in contact with one surface of the panel portion and protrusions positioned between the plurality of depressions.

The insulating portion may be positioned on an inner surface of the frame portion (or each of the frame portions).

The insulating portion may include a first insulating portion positioned on the inner surface of the frame portion facing one surface of the panel portion and a second insulating portion positioned on the inner surface of the frame portion facing the other surface of the panel portion facing the one surface.

A space may be formed between the insulating portion and the insulating layer.

The insulation apparatus may further include a coupling member coupling the panel portion to the frame portion.

The coupling member may be connected to the panel portion and the frame portion by passing through the insulating portion.

According to another aspect of the present disclosure, there is provided an energy storage system including a base portion configured (or able) to be positioned on the ground, a sidewall portion formed to extend upward(ly) along an outer perimeter of the base portion, and a cover portion covering the sidewall portion, wherein at least one of the base portion, the sidewall portion and the cover portion includes an insulation apparatus, the insulation apparatus includes a panel portion including an insulating layer; a pair of frame portions arranged to respectively surround opposing sides of the panel portion; and an insulating portion positioned between the panel portion and the frame portion, and a space is formed between the pair of the frame portions and the panel portion.

The panel portion may include a first cover layer positioned on one surface of the insulating layer and a second cover layer positioned to face the first cover layer with the insulating layer therebetween.

An area of the first cover layer or the second cover layer may be greater than an area of the insulating layer.

The energy storage system may further include a panel cover positioned on one surface of the panel portion facing an external space of the energy storage system.

The panel cover may include a plurality of depressions in contact with one surface of the panel portion and protrusions positioned between the plurality of depressions.

The insulating portion may be positioned on an inner surface of the frame portion.

The insulating portion may include a first insulating portion positioned on the inner surface of the frame portion facing one surface of the panel portion and a second insulating portion positioned on the inner surface of the frame portion facing the other surface of the panel portion facing the one surface.

A space may be formed between the insulating portion and the insulating layer.

The energy storage system may further include a coupling member coupling the panel portion to the frame portion.

The coupling member may be connected to the panel portion and the frame portion by passing through the insulating portion.

At least some of the above and other features of the invention are set out in the claims.

Other aspects, features and advantages than those described herein will become apparent from the following drawings, claims and detailed description of the disclosure.

### BRIEF DESCRIPTION OF THE DRAWINGS

FIG. 1 is a perspective view schematically illustrating an energy storage system according to embodiments, in which:
FIG. 2 is a perspective view illustrating an insulation apparatus according to embodiments, which is an enlarged view of portion A of FIG. 1;
FIG. 3 is a cross-sectional view taken along line I-I' of FIG. 2;
FIG. 4 is a cross-sectional view illustrating a state in which a panel portion is coupled to a frame portion by a coupling member;
FIG. 5 is a perspective view illustrating an insulation apparatus according to embodiments;
FIG. 6 is a cross-sectional view taken along line II-II' of FIG. 5.

### DETAILED DESCRIPTION

The present disclosure may include various modifications and embodiments, and specific embodiments are illustrated in the drawings and are described in detail in the detailed description. However, it should be understood that the present disclosure is not limited to the specific embodiments, but includes all modifications, equivalents, and substitutes included in the technical scope of the present disclosure. In the following description of the present disclosure, a detailed description of known functions and configurations incorporated herein will be omitted when it may make the subject matter of the present disclosure rather unclear.

It will be understood that, although the terms first, second, etc. may be used herein to describe various components, these components should not be limited by these terms. The terms are used only for the purpose of distinguishing one component from other components.

The terminology used herein is for the purpose of describing particular embodiments only and is not intended to be limiting of the present disclosure. As used herein, the singular forms "a," "an", and "the" are intended to include the plural forms as well, unless the context clearly indicates otherwise. In addition, in each drawing, components are exaggerated, omitted, or schematically illustrated for convenience and clarity of description, and the size of each component is not entirely reflective.

In the description of each component, in the case where it is described as being formed "on" or "under", "on" and "under" include all formed directly or with other components therebetween, and the criteria of "on" and "under" will be described with respect to the drawings.

Hereinafter, embodiments of the present disclosure will be described in detail with reference to the accompanying drawings, and in the description with reference to the accompanying drawings, the same or corresponding components are given the same reference numerals, and redundant descriptions thereof will be omitted.

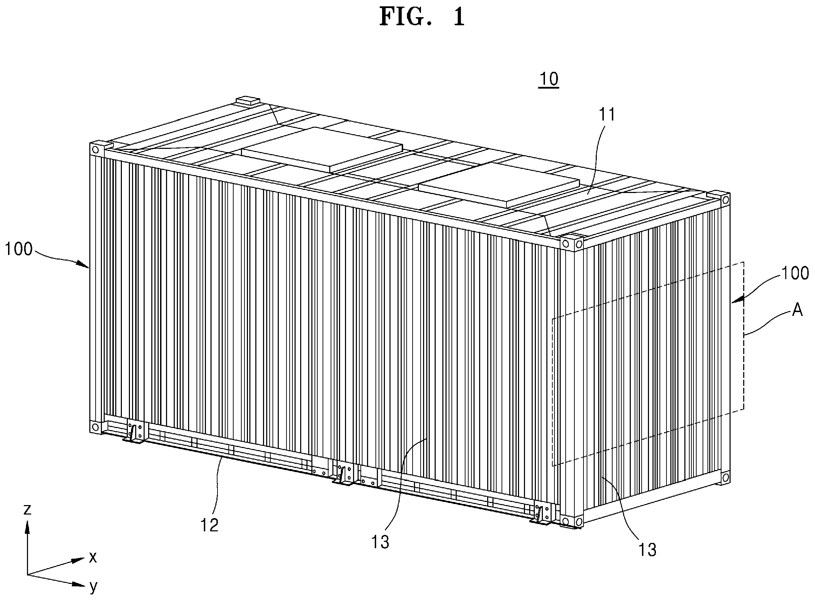

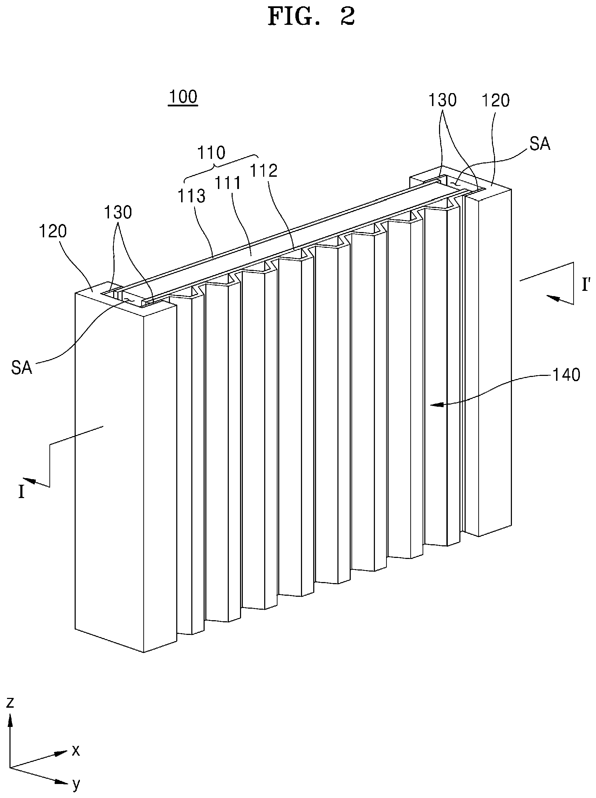

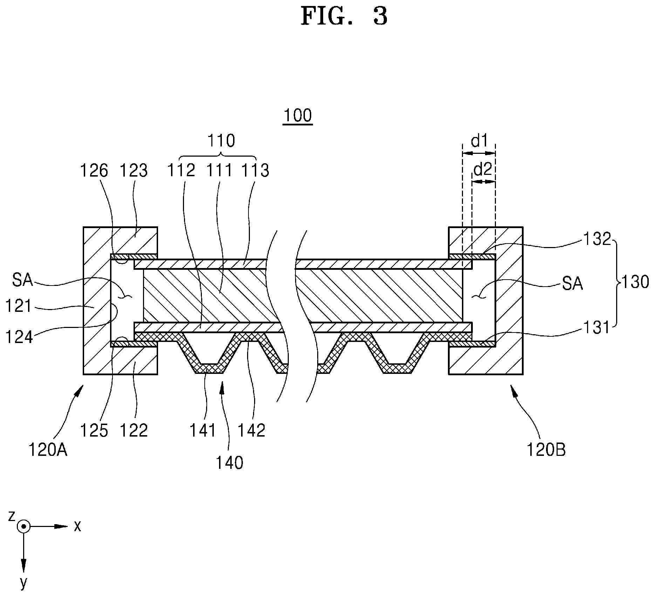

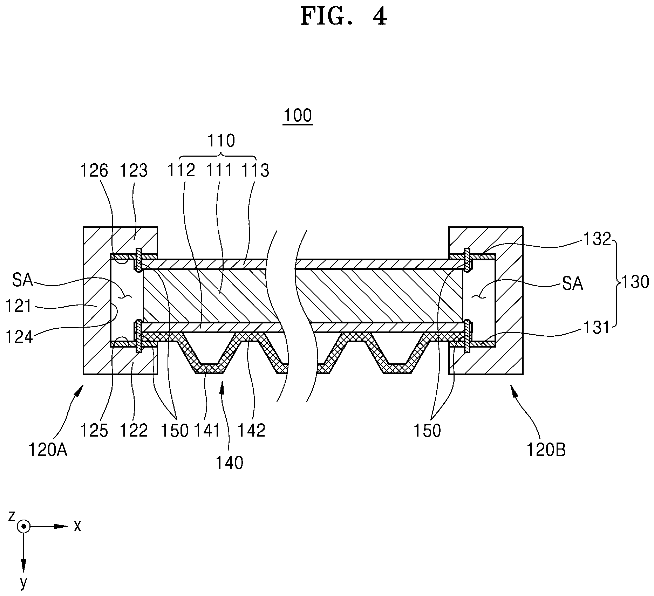

FIG. 1 is a perspective view schematically illustrating an energy storage system 10 according to embodiments, and FIG. 2 is a perspective view illustrating an insulation apparatus 100 according to embodiments, which is an enlarged view of portion A of FIG. 1. FIG. 3 is a cross-sectional view taken along line I-I' of FIG. 2, and FIG. 4 is a cross-sectional view illustrating a state in which a panel portion 110 is coupled to a frame portion 120 by a coupling member 150.

First, referring to FIG. 1, the energy storage system 10 according to embodiments may include a cover portion 11, a base portion 12, and a sidewall portion 13. The energy storage system 10 may be provided in a rectangular or hexahedral shape with an internal accommodating space. The energy storage system 10 may be used for, but is not limited to, transporting or storing cargo or for residential purposes. In embodiments, the energy storage system 10 may be an energy storage system in which an energy storage unit, such as a battery or fuel cell, is loaded.

The cover portion 11 may correspond to an upper portion of the energy storage system 10 and may be positioned above the sidewall portion 13. The cover portion 11 may be formed with the same structure as the sidewall portion 13 or with a different structure. The cover portion 11 may have a rectangular shape having a longer side and a shorter side but is not limited thereto.

The base portion 12 may correspond to a lower portion of the energy storage system 10 and may be positioned to face the cover portion 11. The base portion 12 may be formed to be positioned on the ground. The base portion 12 may be connected to a lower end of the sidewall portion 13.

The sidewall portion 13 may correspond to a side portion of the energy storage system 10 and may extend upward along an outer perimeter of the base portion 12. The sidewall portion 13 may include a plurality of panels extending upward to correspond to the longer side or shorter side of the cover portion 11 but is not limited thereto, and as another example, the sidewall portion 13 may be integrally formed to extend along the outer perimeter of the base portion 12. An upper end of the sidewall portion 13 may be connected to the cover portion 11.

The cover portion 11, the base portion 12, and the sidewall portion 13 may be coupled to form the exterior of the energy storage system 10. The cover portion 11, the base portion 12, and the sidewall portion 13 may form an internal space for accommodating cargo therein. At least one of the cover portion 11, the base portion 12, and the sidewall portion 13 may include the insulation apparatus 100.

Referring to FIGS. 2 and 3, the insulation apparatus 100 according to embodiments may include a panel portion 110, a frame portion 120, and an insulating portion 130 and may further include a panel cover 140. The insulation apparatus 100 may be used as an upper panel, a lower panel, a side panel, etc. that forms the exterior of the energy storage system 10.

The panel portion 110 may have a certain thickness and may extend in a first direction (an x-axis direction in the drawing). The panel portion 110 may serve as an insulator that blocks heat transfer between the inner surface positioned toward the inside of the energy storage system 10 and the outer surface positioned toward the outside of the energy storage system 10 in the insulation apparatus 100. The panel portion 110 may be formed in a multilayer structure to increase insulation but is not limited thereto.

In embodiments, the panel portion 110 may include an insulating layer and a first cover layer 112 and a second cover layer 113 positioned to face each other with the insulating layer 111 therebetween. The insulating layer 111 may have a certain area and thickness and may include a material with high insulation properties.

For example, the insulating layer 111 may include a polyurethane material, a polyethylene material, a polyester material, a polycarbonate material, a polypropylene material, a phenol material, an epoxy material, a resin material reinforced with glass fibers, or a foam material reinforced with glass fibers.

The insulating layer 111 may include a single layer but is not limited thereto and may include multiple layers including the same material or different materials.

The first cover layer 112 may be placed on one surface of the insulating layer 111, and the second cover layer 113 may be placed on the other surface of the insulating layer 111. The first cover layer 112 and the second cover layer 113 may be arranged parallel to face each other with the insulating layer 111 therebetween.

The first cover layer 112 and the second cover layer 113 may include a metal material having a certain strength and durability to protect the insulating layer 111 positioned therebetween. For example, the first cover layer 112 and the second cover layer 113 may include an aluminum material, a nickel alloy steel material, a stainless steel material, etc.

The first cover layer 112 and the second cover layer 113 may have a thickness smaller than that of the insulating layer 111. In addition, the first cover layer 112 and the second cover layer 113 may have an area corresponding to the area of the insulating layer 111. For example, the first cover layer 112 and/or the second cover layer 113 may have the same area as the insulating layer 111 or may have a greater area than the insulating layer 111.

In detail, the first cover layer 112 and the second cover layer 113 may have an area equal to or greater than that of the insulating layer 111 and may be arranged to cover both one surface and the other surface of the insulating layer 111.

When the first cover layer 112 and the second cover layer 113 have a greater area than the insulating layer 111, the insulating layer 111 may be placed in the central portion of the first cover layer 112 and the central portion of the second cover layer 113. Here, the edges of the first cover layer 112 and the second cover layer 113 may protrude outward relative to the edge of the insulating layer 111.

The first cover layer 112 and the second cover layer 113 may be bonded to the insulating layer 111 through an adhesive placed between each of the first cover layer 112 and the second cover layer 113 and the insulating layer 111. Here, the adhesive may be a heat-curable adhesive of the epoxy or polyurethane series but is not limited thereto.

The frame portion 120 may be placed on opposing sides of the panel portion 110. Here, the opposing sides of the panel portion 110 may refer to the opposing end portions of the panel portion 110 in the first direction (the x-axis direction), which is a length direction of the panel portion 110. The end portion of the panel portion 110 (hereinafter, one end portion) in the first direction (the x-axis direction) may refer to all of one end portion of the insulating layer 111, one end portion of the first cover layer 112, and one end portion of the second cover layer 113 that are arranged in the same direction.

In detail, the frame portion 120 may be provided as a pair and may include a first frame portion 120A positioned at one end of the panel portion 110 in the first direction (the x-axis direction) and a second frame portion 120B positioned at the other end opposite to the one end. The first frame portion 120A and the second frame portion 120B may have a symmetrical structure.

The pair of frame portions 120 may be arranged to surround the opposing sides of the panel portion 110. In detail, the frame portion 120 may include a body portion 121, a first extension 122, and a second extension 123.

The body portion 121 may have a certain width in a thickness direction (a y-axis direction) of the panel portion 110 and may have a certain length in a second direction (a z-axis direction) which is perpendicular to the first direction (the x-axis direction) which is the length direction of the panel portion 110. The body portion 121 may be positioned parallel to the end portion of the panel portion 110 in the first direction (the x-axis direction).

The first extension 122 may protrude in the first direction (the x-axis direction) from one end of the body portion 121 in the width direction (the y-axis direction), and the second extension 123 may protrude in the first direction (the x-axis direction) from the other end of the body portion 121 in the width direction (the y-axis direction).

Here, the first extension 122 may extend to the outside of the first cover layer 112, and the second extension 123 may extend to the outside of the second cover layer 113. The first extension 122 and the second extension 123 may face each other. That is, the frame portion 120 may have a " 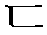 " shape in cross-section on the x-y plane.

The frame portion 120 may have a recess drawn in the first direction (the x-axis direction) by the first extension 122 and the second extension 123 facing each other and the body portion 121 connecting the respective end portions of the first extension 122 and the second extension 123. The recess may include a first inner surface 124 corresponding to the inner side of the body portion 121, a second inner surface 125 corresponding to the inner side of the first extension 122, and a third inner surface 126 corresponding to the inner side of the second extension 123.

One end portion of the panel portion 110 may be inserted into the recess formed in the frame portion 120. That is, the opposing sides of the panel portion 110 may be inserted into the recess of the first frame portion 120A and the recess of the second frame portion 120B, respectively. Accordingly, one end portion of the panel portion 110 may be placed between the first extension 122 and the second extension 123.

Meanwhile, a space SA may be formed between the frame portion 120 and the panel portion 110. In detail, one end portion of the panel portion 110 inserted into the recess of the frame portion 120 may be apart from the first inner surface 124, which is the inner surface of the facing frame portion 120, and the space SA may be formed therebetween.

In detail, when the areas of the first cover layer 112 and the second cover layer 113 is greater than the area of the insulating layer 111, one end portion of the insulating layer 111 may be apart from the facing first inner surface 124 by a first distance d1, and one end portion of the first cover layer 112 or the second cover layer 113 may be apart from the facing first inner surface 124 by a second distance d2. Here, the first distance d1 may have a greater value than that of the second distance d2.

The space SA formed between the frame portion 120 and the panel portion 110 may extend in the second direction (the z direction) along one end portion of the panel portion 110. Due to the space SA, one end portion of the panel portion 110 may not be in direct contact with the first inner surface 124.

The insulating portion 130 may be placed between the frame portion 120 and the panel portion 110. The insulating portion 130 may be placed on the inner surface of the frame portion 120. The insulating portion 130 has an area corresponding to the inner surface of the frame portion 120 and may be placed to cover the inner surface of the frame portion 120.

In embodiments, the insulating portion 130 may be provided as two pieces. In detail, the insulating portion 130 may include a first insulating portion 131 positioned on the first inner surface 125 and a second insulating portion 132 positioned on the second inner surface 126.

The first insulating portion 131 may be positioned to face the first cover layer 112, and the second insulating portion 132 may be positioned to face the second cover layer 113. Here, the first insulating portion 131 may be in contact with the first cover layer 112 or the panel cover 140 to be described herein, and the second insulating portion 132 may be in contact with the second cover layer 113.

The first insulating portion 131 and the second insulating portion 132 may be insulating sheets including an insulating material but are not limited thereto. The first insulating portion 131 may serve to prevent heat conduction between the first cover layer 112 and the first extension 122, and the second insulating portion 132 may serve to prevent heat conduction between the second cover layer 113 and the second extension 123.

The panel cover 140 may be positioned on one surface of the panel portion 110. The one surface of the panel portion 110 on which the panel cover 140 is positioned may be a surface facing an external space of the energy storage system 10 and may correspond to, for example, one surface of the first cover layer 112.

The panel cover 140 may include a plurality of protrusions 141 and a plurality of depressions 142. The protrusion 141 may extend in the second direction (the z-axis direction), and the plurality of protrusions 141 may be arranged in a row parallel to each other on the first cover layer 112.

The protrusion 141 may protrude from one surface of the first cover layer 112 to form a certain space between the protrusion 141 and the first cover layer 112. Because the panel cover 140 includes the protrusion 141, the surface area in contact with air may increase, thereby more easily spreading heat from the first cover layer 112 and increasing load-bearing power of the insulation apparatus 100.

The depression 142 may extend in the second direction (the z-axis direction), and the plurality of depressions 142 may be arranged between the protrusions 141. That is, the protrusion 141 and the depression 142 may be arranged crosswise in the first direction (the x-axis direction) and may form a bent shape. The depression 142 may be in contact with one surface of the first cover layer 112.

The opposing sides of the panel cover 140 in the first direction (the x-axis direction) may be in contact with the opposing sides of the first cover layer 112, respectively. The frame portion 120 may be placed to surround the opposing sides of the panel portion 110 and the opposing sides of the panel cover 140. Here, one end portion of the panel cover 140 may be apart from the first inner surface 124.

Referring to FIG. 4, the insulation apparatus 100 according to embodiments may further include a coupling member 150 that couples the panel portion 110 to the frame portion 120. In detail, the coupling member 150 may couple the first cover layer 112 to the first extension 122 and the second cover layer 113 to the second extension 123.

In more detail, the coupling member 150 may include a first coupling member coupled to the first extension 122 by passing through the first cover layer 112, the panel cover 140, and the first insulating portion 131 and a second coupling member coupled to the second extension 123 by passing through the second cover layer 113 and the second insulating portion 132.

The first coupling member and the second coupling member may each be provided in plurality. The plurality of first coupling members and the plurality of second coupling members may each be arranged in the second direction (the z-axis direction) and may couple the panel portion 110 to the frame portion 120.

For example, the coupling member 150 may be provided as a screw to couple the panel portion 110 to the frame portion 120 in the thickness direction (the y-axis direction) of the panel portion 110. That is, the coupling member 150 may include a screw having a length that may be fitted into the first cover layer 112 and inserted into the first extension 122 or a screw having a length that may be fitted into the second cover layer 113 and inserted into the second extension 123.

However, the present disclosure is not limited thereto, and the coupling member 150 may be any member that may form the space SA between the panel portion 110 and the frame portion 120 and couple the panel portion 110 to the frame portion 120.

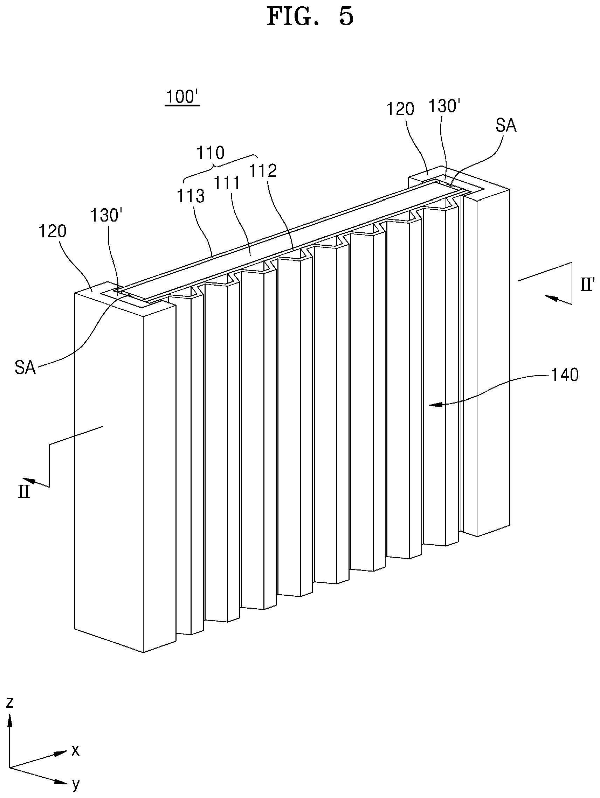

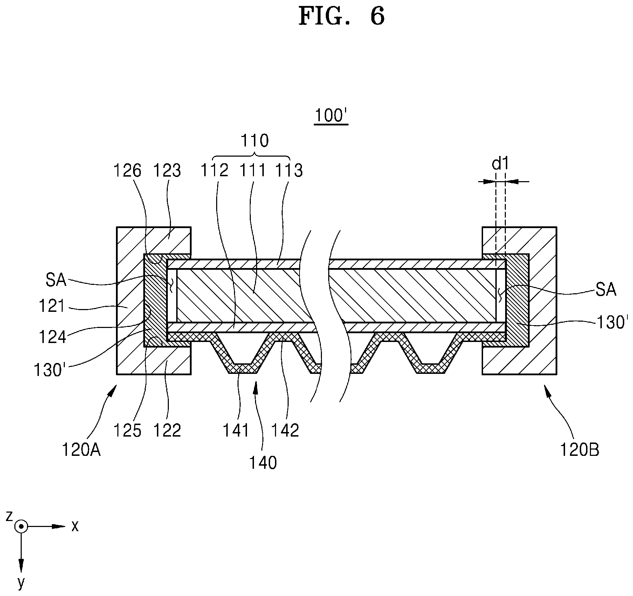

FIG. 5 is a perspective view illustrating an insulation apparatus 100' according to embodiments, and FIG. 6 is a cross-sectional view taken along line II-II' of FIG. 5.

Referring to FIGS. 5 and 6, the insulation apparatus 100' may include the panel portion 110, the frame portion 120, an insulating portion 130', and the panel cover 140. Compared to the insulation apparatus 100 according to the embodiment described herein with reference to FIGS. 2 and 3, the insulation apparatus 100' according to the embodiment illustrated in FIGS. 5 and 6 has a difference in the structure of the insulating portion 130'. Therefore, the following descriptions focus on the difference described herein.

The insulating portion 130' may be formed along the recess of the frame portion 120. In other words, the insulating portion 130' may be formed to cover all of the first inner surface 124, the second inner surface 125, and the third inner surface 126 of the frame portion 120, and all of the insulating portions 130' arranged on the respective inner surfaces of the frame portion 120 may be connected and formed integrally.

Here, the insulating portion 130' may be formed to correspond to the shape of the recess of the frame portion 120. That is, the insulating portion 130' may form the recess into which the panel portion 110 may be inserted, and may fill the recess of the frame portion 120. A thickness of a portion of the insulating portion 130' in contact with the first inner surface 124 may be greater than a thickness of the other portion of the insulating portion 130'.

As the insulating portion 130' covers the entire inner surface of the frame portion 120, one end portion of the first cover layer 112, one end portion of the second cover layer 113, and one end portion of the panel cover 140 may be in contact with the insulating portion 130'.

The insulating layer 111 may be apart from the insulating portion 130' by a third distance d1, and the space SA may be formed between the insulating layer 111 and the insulating portion 130'.

As described herein, the insulation apparatus 100 or 100' according to the embodiments of the present disclosure has the space SA between the panel portion 110 and the frame portion 120 and separately includes the insulating portion 130 positioned between the frame portion 120 and the panel portion 110 or the insulating portion 130' positioned on the inner surface of the frame portion 120, thereby preventing direct contact between the panel portion 110 and the frame portion 120 to prevent heat conduction between the first cover layer 112 and the second cover layer 113.

Through this, in the event of a fire inside the energy storage system 10, the insulation apparatus 100 or 100' may prevent heat inside the energy storage system 10 transferred to the second cover layer 113 from being directly transferred to the first cover layer 112 along the frame portion 120 and may prevent heat from spreading to the periphery of the energy storage system 10. Accordingly, the energy storage system 10 including the insulation apparatus 100 or 100' according to embodiments of the present disclosure may have improved insulation performance and fire resistance performance.

In addition, because the insulation apparatus 100 or 100' according to embodiments of the present disclosure includes the frame portion 120 positioned to surround the opposing sides of the panel portion 110, the panel portion 110 may be fixed to the frame portion 120 even without a fixing unit, such as an angle member, and the manufacturing costs may be reduced.

According to the solution of the present disclosure described herein, the insulation apparatus according to embodiments may prevent heat caused by a fire from being transferred to the outside of the energy storage system along a wall surface of the energy storage system when a fire occurs inside the energy storage system.

In addition, the insulation apparatus according to embodiments may have a simple structure and may be easily installed, thereby reducing manufacturing costs.

In addition, the energy storage system according to embodiments blocks heat from flowing in or being lost through a sidewall, thereby improving insulation performance and fire resistance and stably storing and transporting cargo.

The scope of the present disclosure is not limited by these effects.

While the present disclosure has been particularly shown and described with reference to embodiments thereof, it will be understood by one of ordinary skill in the art that various changes and equivalent other embodiments may be made therein. Therefore, the true technical protection scope of the present disclosure should be determined by the technical idea of the appended claims.

## Claims

1. An insulation apparatus comprising:
a panel portion including an insulating layer;
a pair of frame portions arranged to surround opposing sides of the panel portion; and
an insulating portion positioned between the panel portion and each of the frame portions,
wherein a space is formed between each of the frame portions and the panel portion.

2. The insulation apparatus of claim 1, wherein
the panel portion includes:
a first cover layer positioned on one surface of the insulating layer; and
a second cover layer positioned to face the first cover layer with the insulating layer therebetween.

3. The insulation apparatus of claim 2, wherein:
an area of the first cover layer or the second cover layer is greater than an area of the insulating layer.

4. The insulation apparatus of any preceding claim, further comprising:
a panel cover positioned on one surface of the panel portion facing an external space of the energy storage system.

5. The insulation apparatus of claim 4, wherein:
the panel cover includes a plurality of depressions in contact with one surface of the panel portion and protrusions positioned between the plurality of depressions.

6. The insulation apparatus of any preceding claim, wherein:
the insulating portion is positioned on an inner surface of each of the frame portions.

7. The insulation apparatus of claim 6, wherein:
the insulating portion includes a first insulating portion positioned on the inner surface of each of the frame portions facing one surface of the panel portion and a second insulating portion positioned on the inner surface of the frame portion facing another surface of the panel portion facing the one surface.

8. The insulation apparatus of claim 6 or claim 7, wherein:
a space is formed between the insulating portion and the insulating layer.

9. The insulation apparatus of any preceding claim, further comprising:
a coupling member coupling the panel portion to each of the frame portions.

10. The insulation apparatus of claim 9, wherein:
the coupling member is connected to the panel portion and each of the frame portions by passing through the insulating portion.

11. An energy storage system comprising:
a base portion configured to be positioned on the ground;
a sidewall portion formed to extend upwardly along an outer perimeter of the base portion; and
a cover portion covering the sidewall portion,
wherein at least one of the base portion, the sidewall portion and the cover portion includes an insulation apparatus according to any preceding claim.
